# EUROPÄISCHE PATENTSCHRIFT

(11) **EP 2 684 247 B1**
(45) Veröffentlichungstag und Bekanntmachung des Hinweises auf die Patenterteilung: **08.04.2015**
(21) Anmeldenummer: 12709035.5
(22) Anmeldetag: 28.02.2012
(51) Int. Cl.: H01M 10/0525, H01M 10/613, H01M 10/625, H01M 10/647, H01M 10/6551, H01M 10/6555, H01M 10/656

(54) **VERBINDUNGSSCHICHT MIT ELASTISCHEN FORMTEILEN, BATTERIE MIT DIESER VERBINDUNGSSCHICHT UND KRAFTFAHRZEUG MIT DIESER BATTERIE**
CONNECTING LAYER, BATTERY HAVING SAID CONNECTING LAYER, AND MOTOR VEHICLE HAVING SAID BATTERY
COUCHE DE LIAISON, BATTERIE COMPORTANT CETTE COUCHE DE LIAISON ET VÉHICULE À MOTEUR COMPORTANT CETTE BATTERIE

(30) Priorität: 10.03.2011 DE 102011005324
(43) Veröffentlichungstag der Anmeldung: 15.01.2014
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: GUENON, Sylvain, F-60490 Ressons Sur Matz (FR)
(74) Vertreter: Bee, Joachim
(86) Internationale Anmeldenummer: PCT/EP2012/053315
(87) Internationale Veröffentlichungsnummer: WO 2012/119887

(56) Entgegenhaltungen:
- EP-A1- 2 026 387
- WO-A2-2010/037796
- DE-A1-102008 010 839
- DE-A1-102008 034 862
- DE-A1-102008 034 875
- DE-A1-102008 034 876

## Beschreibung

Die vorliegende Erfindung betrifft eine Verbindungsschicht zur Verbesserung des thermischen Kontakts zweier aneinander angeordneter Bauteile, eine Batterie mit einer Verbindungsschicht sowie ein Kraftfahrzeug mit einer Batterie mit dieser Verbindungsschicht, wobei die Verbindungsschicht aus einem thermisch leitfähigen Material gefertigt ist und eine im Wesentlichen flache Grundgestalt mit einer Grundhöhe und einer Oberseite und einer Unterseite aufweist.

### Stand der Technik

Um den thermischen Kontakt zwischen zwei Bauelementen zu verbessern, ist es bekannt, so genannte Wärmeleitpaste - eine gelartige Substanz - an den Berührungsstellen der Bauelemente aufzutragen.

Auch Festkörper werden zur Wärmeleitung verwendet. So geht aus der DE 10 2007 009 315 A1 eine Vorrichtung zur Kühlung elektrischer Elemente hervor, bei welcher elektrische Elemente mittels stoffschlüssig mit den elektrischen Elementen verbundener Leitkörper einen thermischen Kontakt zu einem Kühlkörper herstellen sollen.

Aus der DE 2007 021 309 A1 ist eine Antriebsbatteriebaugruppe bekannt, bei welcher eine wärmeführende Lammelle, die wenigstens abschnittsweise an wenigstens einem Zellengehäuse anliegt, den thermischen Kontakt zu der Zelle verbessern soll.

### Offenbarung der Erfindung

Erfindungsgemäß wird eine Verbindungsschicht zur Verbesserung des thermischen Kontakts zweier aneinander angeordneter Bauteile vorgeschlagen, welche aus einem thermisch leitfähigen Festmaterial gefertigt ist und eine im Wesentlichen flache Grundgestalt mit einer Grundhöhe und einer Oberseite und einer Unterseite aufweist. Dabei umfasst die Verbindungsschicht eine Vielzahl von Verformungselementen, wobei die Verformungselemente aus der Grundgestalt der Verbindungsschicht herausragen, eine die Grundhöhe überragende Ausgangshöhe und eine elastische Verformbarkeit aufweisen. Die Batterie ist dabei bevorzugt eine Li-Ionen-Batterie.

Unter Festmaterial ist in dieser Anmeldung ein nicht amorpher Stoff zu verstehen, mit geordneten inneren Strukturen, der nicht zum Fließen neigt. Dabei können Metalle, Kunststoffe oder dergleichen zum Einsatz kommen. Gele oder Pasten zählen hiernach nicht zu den Feststoffen.

Mit der erfindungsgemäßen Verbindungsschicht wird die thermische Kontaktierung von zwei Oberflächen deutlich verbessert, ohne dabei aufwendige Materialien, Verarbeitungsprozesse oder Konstruktionskonzepte involvieren zu müssen.

Mit der erfindungsgemäßen Verbindungsschicht wird vorteilhaft mit ihrer Ober-und/oder Unterseite eine deformierbare Kontaktfläche aus gewöhnlichem Festmaterial bereitgestellt. Schon durch geringes Anpressen, ohne großen mechanischen Aufwand, verformt sich die Kontaktfläche und gleicht Toleranzen in den Oberflächen der zu kontaktierenden Bauteile aus. Durch lokale Verformungen wird eine Vielzahl von Berührungspunkten geschaffen, an denen ein optimaler Wärmeübergang gewährleistet werden kann.

Ein Einsatz der Verbindungsschicht erfordert lediglich die Verfügbarkeit einer geringen Kraft, die in vielen Fällen zur Realisierung anderer Funktionen, beispielsweise für die Befestigung der Bauteile vorhanden ist. Teure Nachbearbeitungen der Kontaktflächen, kostspielige Aufbringungen von teuren wärmeleitenden viskosen Materialien, wie Wärmeleitpasten, Implementierungen von Verspannsystemen oder dergleichen können mit der erfindungsgemäßen Verbindungsschicht eingespart werden.

In einer bevorzugten Ausgestaltung der erfindungsgemäßen Verbindungsschicht ist vorgesehen, dass die Verformungselemente durch Beaufschlagung einer im Wesentlichen senkrecht zur Verbindungsschicht wirkenden definierten Kraft die Grundhöhe aufweisen.

Hiermit ist es vorteilhaft ermöglicht, die Verbindungsschicht durch bloßes Zusammenschieben der benachbarten Bauteile zur Wirkung zu bringen, da hierbei eine im Wesentlichen senkrecht zur Verbindungsschicht gerichtete Kraft wirkt. Diese Kraft wird beispielsweise beim bekannten Verspannen der Batteriezellen mit Verspanngurten aufgebracht.

In einer weiteren bevorzugten Ausgestaltung der erfindungsgemäßen Verbindungsschicht ist vorgesehen, dass die Verformungselemente zwischen der Ausgangshöhe und der Grundhöhe elastisch verformbar sind.

Hiermit wird bei einer Verwendung der Verbindungsschicht vorteilhaft eine Vorspannung zwischen den Bauelementen aufgebracht, wodurch beispielsweise einer Lösbarkeit von Befestigungen oder akustischen Störungen entgegengewirkt wird. Zudem kann eine Verbindungsschicht hiermit mehrmals für einen Einbau bereitstehen, da die durch einen regulären Einbau erreichbaren Deformationen nicht dauerhaft sind.

In einer weiteren bevorzugten Ausgestaltung der erfindungsgemäßen Verbindungsschicht ist vorgesehen, dass die Verbindungsschicht im Wesentlichen die Gestalt einer Platte aufweist.

Mit dieser Ausführung ist die Verbindungsschicht besonders zur Verbesserung des thermischen Kontakts zweier aneinander angeordneter prismatischer Bauteile geeignet.

In einer weiteren bevorzugten Ausgestaltung der erfindungsgemäßen Verbindungsschicht ist vorgesehen, dass wenigstens einige der Verformungselemente als eine von der Verbindungsschicht abstehende Lasche ausgebildet sind.

Hiermit sind vorteilhaft sehr günstig kleinste elastische Strukturen zu erzeugen, die zudem sehr nah aneinander platziert werden können. Zudem ruft eine Verformung der abstehenden Lasche vorteilhaft keine Verschiebungen der Verbindungsschicht hervor.

In einer weiteren bevorzugten Ausgestaltung der erfindungsgemäßen Verbindungsschicht ist vorgesehen, dass wenigstens einige der Verformungselemente als Ausbeulungen ausgebildet sind.

Hiermit sind vorteilhaft Verformungselemente zu erzeugen, die gleichzeitig sowohl zur Oberseite als auch zur Unterseite wirken.

Erfindungsgemäß wird zudem eine Batterie mit der erfindungsgemäßen Verbindungsschicht in den zuvor genannten Ausgestaltungen bereitgestellt, wobei die Verbindungsschicht zwischen einem ersten Bauteil und einem zweiten Bauteil der Batterie angeordnet ist.

Dabei ist die Oberseite der Verbindungsschicht dem ersten Bauteil zugewandt und die Unterseite der Verbindungsschicht dem zweiten Bauteil. Die Oberseite der Verbindungsschicht steht zudem mit dem ersten Bauteil in thermischen Kontakt und die Unterseite der Verbindungsschicht mit dem zweiten Bauteil.

Die Vorteile der erfindungsgemäßen Verbindungsschicht als Einzelteil kommen so auch der Batterie als Baugruppe zugute.

In einer bevorzugten Ausgestaltung der erfindungsgemäßen Batterie ist vorgesehen, dass die Verbindungsschicht in eines der Bauteile integriert ist.

Hiermit ist vorteilhaft die Anzahl der Einzelteile verringert.

In einer weiteren bevorzugten Ausgestaltung der erfindungsgemäßen Batterie ist vorgesehen, dass zumindest eines der Bauteile eine Batteriezelle ist. Besonders bei Batteriezellen, insbesondere bei Li-Ionen-Zellen, gilt es Temperaturgradienten in der Zelle zu vermeiden. Die Wärmeflüsse an der Oberfläche der Batteriezelle werden mit der erfindungsgemäßen Schicht vorteilhaft begünstigt. Eine Temperierung ist so effektiver möglich. Das zweite Bauteil ist hierbei beispielsweise eine weitere Batteriezelle oder bevorzugt ein Kühlelement, wie beispielsweise eine Kühlplatte oder ein Kühlmittelkanal.

Erfindungsgemäß wird weiterhin ein Kraftfahrzeug mit der erfindungsgemäßen Batterie bereitgestellt, wobei die Batterie mit einem Antriebssystem des Kraftfahrzeugs verbunden ist.

Vorteilhafte Weiterbildungen der Erfindung sind in den Unteransprüchen angegeben und in der Beschreibung ausgeführt.

Der Begriff Batterie schließt in dieser Anmeldung auch Batteriesysteme, Akkumulatoren, Akkumulatorbatterien, Akkumulatorsysteme, insbesondere Li-Ionen-Systeme oder Li-Polymer-Ionen-Systeme mit ein.

### Zeichnungen

Ausführungsbeispiele der Erfindung werden anhand der Zeichnungen und der nachfolgenden Beschreibung näher erläutert. Es zeigen:
Figur 1 einen Querschnitt einer erfindungsgemäßen Verbindungsschicht in einer Ausführung mit Laschen als Verformungselemente,
Figur 2 einen Querschnitt einer Verbindungsschicht in einer Ausführung mit Ausbeulungen als Verformungselemente,
Figur 3 einen Querschnitt einer erfindungsgemäßen Verbindungsschicht in einer Ausführung mit unterschiedlichen Verformungselementen,
Figur 4 eine erfindungsgemäße Verbindungsschicht zwischen zwei Bauteilen,
Figur 5 eine Verbindungsschicht in räumlicher Darstellung, und
Figur 6 eine Anordnung mehrerer Batteriezellen an einem Kühlelement.

### Ausführungsformen der Erfindung

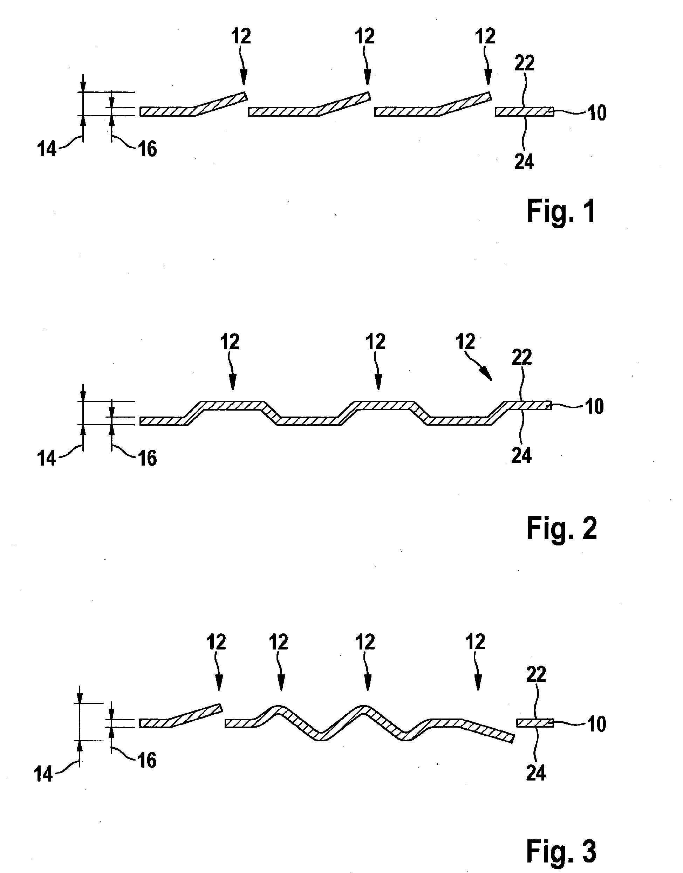

In den Figuren 1, 2 und 3 ist jeweils beispielhaft und nicht beschränkend der Querschnitt einer erfindungsgemäßen Verbindungsschicht 10 gezeigt.

Die Verbindungsschicht 10 weist im Wesentlichen eine flächige Gestallt mit einer Oberseite 22 und einer Unterseite 24 auf. Die Verbindungsschicht 10 weist im Wesentlichen eine Grundhöhe 16 auf. Die Verbindungsschicht 10 ist aus einem Festmaterial gefertigt.

Die Verbindungsschicht 10 ist bevorzugt mit einer Vielzahl von Verbindungselementen 12 versehen. Diese Verbindungselemente 12 ragen aus der Grundgestalt der Verbindungsschicht 10 heraus und weisen im unbelasteten Zustand eine Ausgangshöhe 14, die größer als die Grundhöhe 16 ist, auf.

In den Figuren 1, 2 und 3 sind jeweils beispielhaft und nicht beschränkend unterschiedliche Ausführungen der Verformungselemente 12 dargestellt. So sind in der Figur 1 drei Verformungselemente 12 einheitlich durch von der Grundgestalt abstehende Laschen gebildet. Die Laschen stehen dabei bevorzugt in einem stumpfen Winkel von der Grundgestalt ab, damit beim Aufbringen einer im Wesentlichen senkrecht zur Oberfläche wirkenden Kraft gewährleistet ist, dass die Laschen in die Grundgestalt hineinrücken. Während des Hineinrückens der Laschen in die Grundgestalt weist die Verbindungsschicht auch an dieser Stelle eine Höhe in der Größe der Grundhöhe 16 auf.

In Figur 2 sind die Verformungselemente 12 einheitlich durch kantige Ausbeulungen erzeugt. Die Ausbeulungen sind bevorzugt sehr schwach ausgeprägt, damit beim Aufbringen einer im Wesentlichen senkrecht zur Oberfläche wirkenden Kraft gewährleistet ist, dass die Ausbeulungen in die Grundgestalt hineinrücken. Der Bereich zwischen zwei Ausbeulungen an der Oberseite 22 der Verbindungsschicht 10 ist dabei gleichzeitig eine Ausbeulung an der Unterseite 24 der Verbindungsschicht 10.

Die Ausbeulungen können auch rund ausgeführt sein. So zeigt die Figur 3 beispielhaft und nicht beschränkend eine Variante der Verbindungsschicht 10, die auch runde Ausbeulungen als Verformungselement 12 aufweist. Zudem ist die Verbindungsschicht 10 gleichzeitig mit Verformungselementen 12 gemäß Figur 1 versehen.

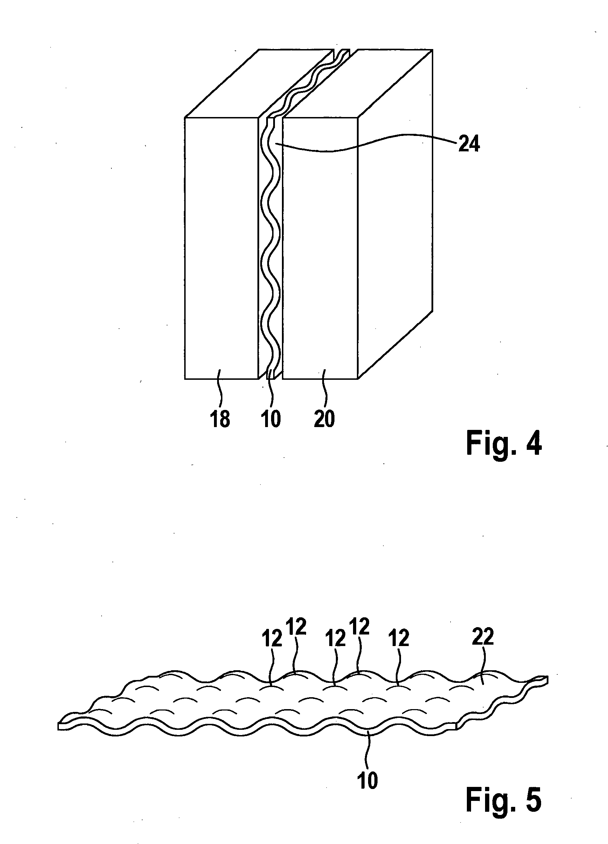

In der Figur 4 ist beispielhaft und nicht beschränkend eine erfindungsgemäße Verbindungsschicht 10 in einer Anordnung zwischen einem ersten Bauteil 18 und einem zweiten Bauteil 20 gezeigt. Dabei ist die nicht dargestellte Oberseite 22 der Verbindungsschicht 10 zum ersten Bauteil 18 gewandt und die Unterseite 24 zum zweiten Bauteil 20.

Die in der Figur 4 gezeigte Anordnung zeigt einen unfertigen Montagezustand. Beim Gegeneinanderdrücken der Bauteile 18 und 20 verformt sich die Verbindungsschicht 10 entsprechend der Flächen der gegen sie drückenden Bauteile 18, 20. Bei zwei sehr planen und parallel angeordneten Flächen würde die Verbindungsschicht ebenfalls eine plane Oberfläche erhalten. Da plane Oberflächen, insbesondere im mikroskopischen Bereich, eines hohen Fertigungsaufwands bedürfen, sind sie in der Praxis für preisgünstige Güter nicht anzutreffen. Um zwischen nicht planen und/oder genau parallelen Flächen einen guten thermischen Kontakt herzustellen, gleicht die Verbindungsschicht 10 Unebenheiten oder Schiefen durch partielle Verformungen aus.

In der Figur 5 ist beispielhaft und nicht beschränkend eine erfindungsgemäße Verbindungsschicht 10 in einer räumlichen Ansicht abgebildet. Figur 5 zeigt die Oberseite 22 einer erfindungsgemäßen Verbindungsschicht 10.

Die Anordnung der Verformungselemente 12 ist beliebig. Bevorzugt sind die Verformungselemente 12 gleichmäßig über der Oberfläche verteilt. Dabei kann sowohl die Oberfläche der Oberseite 22, als auch die Oberfläche der Unterseite 24 Verformungselemente 12 aufweisen.

In der in Figur 5 gezeigten Variante weist die nicht dargestellte Unterseite 24 die Negativform der Oberseite 22 auf. Erfindungsgemäß ist es aber auch möglich, dass die Verformungselemente 12 nur aus einer oberen Schicht oder Lage der Verformungsschicht 10 herausgebildet sind und die Kontur der anderen Seite an diesen Stellen davon unbeeinflusst ist.

Bevorzugt ist die erfindungsgemäße Verbindungsschicht 10 eine Folie aus wärmeleitendem Festmaterial. Sie kann als separates Einzelteil ausgebildet oder in ein Bauteil integriert sein. In bevorzugter Ausgestaltung ist die Verbindungsschicht 10 aus der Oberfläche eines Bauteilgehäuses gebildet.

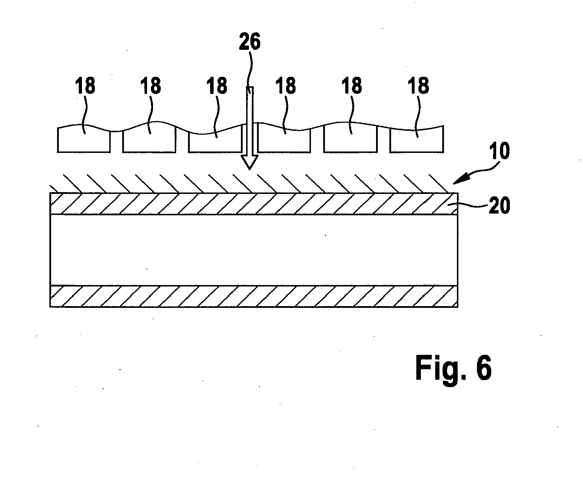

Figur 6 zeigt beispielhaft und nicht beschränkend eine Anordnung mehrerer Batteriezellen an einem Kühlelement. Hierbei sind mehrere erste Bauteile 18 jeweils als Batteriezelle ausgebildet. Das zweite Bauteil 20 wird in der Ausführung gemäß Figur 6 von einem Kühlelement, vorzugsweise einem Kühlmittelkanal beziehungsweise Strömungskanal gebildet. Der Kühlmittelkanal kann dabei Teil einer Kühlplatte sein.

In der in Figur 6 gezeigten Ausführung ist die Verbindungsschicht 10 in der Oberfläche des zweiten Bauteils 20 integriert. Die Integration der Verbindungsschicht 10 auf einer Oberfläche, insbesondere auf einer Kühloberfläche eines Kühlelements, ist beispielweise während eines Fügeprozesses des Bauteils leicht vorzunehmen. So werden Kühlplatten beispielsweise bevorzugt durch Löten gefügt. Die Verbindungsschicht 10 wird dann mit der Kühlplatte verlötet. Somit ist vorteilhaft ohne zusätzlichen Fertigungsaufwand eine Integration der Verbindungsschicht 10 möglich und ein thermischer Kontakt zwischen der Kühlplatte als zweites Bauteil 20 und den Batteriezellen als erste Bauteile 18 gewährleistet.

Die in Figur 6 gezeigte Anordnung stellt einen unfertigen Montagezustand dar. Die Bauteile 18 und 20 sind für einen Endmontagezustand in Richtung der Anpressrichtung 26 gegeneinander zu pressen. Beim Gegeneinanderpressen der Bauteile 18 und 20 verformt sich die Verbindungsschicht 10 entsprechend der Oberflächen der gegen sie drückenden Bauteile 18, 20, und eine thermisch gut leitende Verbindung wird hergestellt.

## Patentansprüche

1. Verbindungsschicht (10) zur Verbesserung des thermischen Kontakts zweier aneinander angeordneter Bauteile, wobei die Verbindungsschicht (10) aus einem thermisch leitfähigen Festmaterial gefertigt ist und eine im Wesentlichen flache Grundgestalt mit einer Grundhöhe (16) und einer Oberseite (22) und einer Unterseite (24) aufweist, wobei die Verbindungsschicht (10) eine Vielzahl von Verformungselementen (12) umfasst, wobei die Verformungselemente (12) aus der Grundgestalt der Verbindungsschicht (10) herausragen, eine die Grundhöhe (16) überragende Ausgangshöhe (14) und eine elastische Verformbarkeit aufweisen,
**dadurch gekennzeichnet**,
dass wenigstens einige der Verformungselemente (12) als eine von der Verbindungsschicht (10) abstehende Lasche ausgebildet sind.

2. Verbindungsschicht (10) nach Anspruch 1, wobei die Verformungselemente (12) durch Beaufschlagung einer im Wesentlichen senkrecht zur Verbindungsschicht (10) wirkenden definierten Kraft die Grundhöhe (16) aufweisen.

3. Verbindungsschicht (10) nach Anspruch 2, wobei die Verformungselemente (12) zwischen der Ausgangshöhe (14) und der Grundhöhe (16) elastisch verformbar sind.

4. Verbindungsschicht (10) nach einem der vorherigen Ansprüche, wobei die Verbindungsschicht (10) im Wesentlichen die Gestalt einer Platte aufweist.

5. Batterie mit einem ersten Bauteil (18) und einem zweiten Bauteil (20) und einer zwischen dem ersten Bauteil (18) und dem zweiten Bauteil (20) angeordneten Verbindungsschicht (10) nach einem der Ansprüche 1 bis 4.

6. Batterie nach Anspruch 5, wobei die Verbindungsschicht (10) in eines der Bauteile (18, 20) integriert ist.

7. Batterie nach Anspruch 5 oder 6, wobei zumindest eines der Bauteile (18, 20) eine Batteriezelle ist.

8. Kraftfahrzeug mit einer Batterie mit einem ersten Bauteil (18) und einem zweiten Bauteil (20) und einer zwischen dem ersten Bauteil (18) und dem zweiten Bauteil (20) angeordneten Verbindungsschicht (10) nach einem der Ansprüche 1 bis 4, wobei die Batterie mit einem Antriebssystem des Kraftfahrzeugs verbunden ist.

## Claims

1. Connecting layer (10) for improving the thermal contact between two components arranged one against another, wherein the connecting layer (10) is produced from a thermally conductive solid material and has a substantially flat basic shape with a basic height (16) and a top side (22) and a bottom side (24), wherein the connecting layer (10) comprises a multiplicity of deformation elements (12), and wherein the deformation elements (12) protrude from the basic shape of the connecting layer (10) and have an initial height (14) which protrudes beyond the basic height (16) and elastic deformability,
**characterized**
in that at least some of the deformation elements (12) are in the form of a tab which sticks out from the connecting layer (10).

2. Connecting layer (10) according to Claim 1, wherein the deformation elements (12) have the basic height (16) as a result of the application of a defined force acting substantially perpendicular to the connecting layer (10).

3. Connecting layer (10) according to Claim 2, wherein the deformation elements (12) are elastically deformable between the initial height (14) and the basic height (16).

4. Connecting layer (10) according to one of the preceding claims, wherein the connecting layer (10) is substantially in the form of a plate.

5. Battery with a first component (18) and a second component (20) and a connecting layer (10), arranged between the first component (18) and the second component (20), according to one of Claims 1 to 4.

6. Battery according to Claim 5, wherein the connecting layer (10) is integrated in one of the components (18, 20).

7. Battery according to Claim 5 or 6, wherein at least one of the components (18, 20) is a battery cell.

8. Motor vehicle having a battery with a first component (18) and a second component (20) and a connecting layer (10), arranged between the first component (18) and the second component (20), according to one of Claims 1 to 4, wherein the battery is connected to a drive system of the motor vehicle.

## Revendications

1. Couche de liaison (10) pour améliorer le contact thermique entre deux composants agencés l'un à côté de l'autre, la couche de liaison (10) étant constituée d'un matériau solide thermiquement conducteur et présentant une configuration de base essentiellement plate ayant une hauteur de base (16) et un côté supérieur (22) et un côté inférieur (24), la couche de liaison (10) comprenant une pluralité d'éléments de déformation (12), les éléments de déformation (12) dépassant de la configuration de base de la couche de liaison (10), présentant une hauteur initiale (14) qui dépasse la hauteur de base (16) et une déformabilité élastique, **caractérisée en ce que**
au moins certains des éléments de déformation (12) étant configurés sous la forme d'une patte distante de la couche de liaison (10).

2. Couche de liaison (10) selon la revendication 1, dans laquelle les éléments de déformation (12) présentent la hauteur de base (16) par application d'une force définie agissant essentiellement perpendiculairement à la couche de liaison (10).

3. Couche de liaison (10) selon la revendication 2, dans laquelle les éléments de déformation (12) sont déformable élastiquement entre la hauteur initiale (14) et la hauteur de base (16).

4. Couche de liaison (10) selon l'une quelconque des revendications précédentes, dans laquelle la couche de liaison (10) présente essentiellement la forme d'une plaque.

5. Batterie comprenant un premier composant (18) et un second composant (20) et une couche de liaison (10) selon l'une quelconque des revendications 1 à 4 agencée entre le premier composant (18) et le second composant (20).

6. Batterie selon la revendication 5, dans laquelle la couche de liaison (10) est intégrée dans un des composants (18, 20).

7. Batterie selon la revendication 5 ou 6, dans laquelle au moins un des composants (18, 20) est une pile.

8. Véhicule automobile comprenant une batterie qui comprend un premier composant (18) et un second composant (20) et une couche de liaison (10) selon l'une quelconque des revendications 1 à 4 agencée entre le premier composant (18) et le second composant (20), la batterie étant reliée à un système d'entraînement du véhicule automobile.
